Europäisches Patentamt

European Patent Office

Office européen des brevets

(11) Publication number: **0 049 952**
**B1**

(12) **EUROPEAN PATENT SPECIFICATION**

(45) Date of publication of patent specification: **17.07.85**

(51) Int. Cl.⁴: **H 04 L 7/00**

(21) Application number: **81304163.9**

(22) Date of filing: **11.09.81**

(54) Synchronizing circuit.

(30) Priority: **27.09.80 JP 133681/80**

(43) Date of publication of application:
**21.04.82 Bulletin 82/16**

(45) Publication of the grant of the patent:
**17.07.85 Bulletin 85/29**

(84) Designated Contracting States:
**DE FR GB**

(56) References cited:
**GB-A- 968 730**
**US-A-3 072 804**
**US-A-4 119 796**

(73) Proprietor: **FUJITSU LIMITED**
**1015, Kamikodanaka Nakahara-ku**
**Kawasaki-shi Kanagawa 211 (JP)**

(72) Inventor: **Shimizu, Kazuyuki**
**2-19-22, Ogawa**
**Machida-shi Tokyo 194 (JP)**
Inventor: **Koshino, Minoru**
**4876-3, Minamiyamada-cho Kouhoku-ku**
**Yokohama-shi Kanagawa 223 (JP)**

(74) Representative: **Allman, Peter John et al**
**Marks and Clerk Scottish Life House Bridge**
**Street**
**Manchester M3 3DP (GB)**

## Description

The present invention relates to a synchronizing circuit, and more specifically to a synchronizing circuit for synchronizing data signals transmitted between clock systems which have the same period but have a varying phase difference, or of which the phase difference undergoes a change with the change in the period thereof.

In dealing with signals between clock systems having a varying phase difference, a variety of methods have been employed to synchronize the signals. One such method consists of using the latches of a plurality of stages based upon the clock system on the receiving side to receive the transmitted signal. However, using this method even when the period of the clock system is fixed, the time until the signal is received by a receiving side clock pulse remains uncertain. Thus, when the signal is received barely in time of the setup time of the latch on the receiving side, the signal is removed by an amount of one period. In another such method, signal paths having different delay times are provided, and an external switch or an internal control latch is set such that an optimum signal path is selected. However, this method is clumsy in operation, since a given path must be selected by setting a delay time or a given time must be selected beforehand and another path must be selected when its operation is not stable.

Moreover using the abovementioned methods it is not possible to exclusively determine the path when the period varies, or when the delay time in the receiving clock system changes.

In the specification of US—A—4119796 there is disclosed a synchronizing circuit for synchronizing data signals transmitted between two clock systems having a varying phase difference comprising a plurality of data transmission paths each having a different delay period, means for determining the phase difference between clock pulses on the transmission side of the transmission paths and clock pulses on the receiver side thereof and for adjusting the delay given to received data in accordance with the said phase difference by selecting one of the transmission paths.

It is known from US—A—4119796 to overcome the above mentioned problems by providing a synchronizing circuit which compares the phases of an input clock pulse and applies feedback so that the delay of the input clock pulse is adjusted to make the phase difference equal zero. The degree of delay of the input data is adjusted in accordance with the value in an up/down counter which indicates the amount of feedback applied. The clock pulse is sent from the sending side to the receiving side in its original form from a frequency band viewpoint and as a result it may not be stable at high frequency. Moreover, in the U.S. patent an analog circuit is required for measuring the phase difference, and therefore, integration of the circuit is not appropriate and the response characteristic for the variation of the delay on the transmission line becomes inferior.

An object of the invention is to provide a circuit for synchronizing signals between clock systems which have a varying phase difference in which the abovementioned problems and disadvantages are at least substantially mitigated.

Another object of the invention is to provide a synchronizing circuit which is capable of exclusively selecting a signal transmission path, even when the signal transmission delay time is changed between the transmitting clock system and the receiving clock system.

According to the invention there is provided a synchronizing circuit for synchronizing data signals transmitted between two clock systems having a varying phase difference comprising a plurality of data transmission paths each having a different delay period, means for determining the phase difference between clock pulses on the transmission side of the transmission paths and clock pulses on the receiver side thereof and for adjusting the delay given to received data in accordance with the said phase difference by selecting one of the transmission paths, characterised in that the means for determining the phase difference comprises a pilot signal generator on the transmission side providing a pilot signal corresponding to the transmission side clock pulses, a plurality of latches on the receiver side of the transmission paths which each latch onto the pilot signal to give different amounts of delay therein relative to the receiver and means for calculating the phase difference between the transmission side clock pulses and the receiver side clock pulses in accordance with the degree of coincidence between the latched pilot signals and the receiver side clock pulses.

Embodiments of the invention will now be described, by way of example, with reference to the accompanying drawings, in which:—

Fig. 1 is a block diagram showing a conventional synchronizing circuit;

Fig. 2 is a diagram of waveforms for illustrating the operation of the circuit of Fig. 1;

Fig. 3 is a block diagram showing another conventional synchronizing circuit;

Fig. 4 is a block diagram of a synchronizing circuit according to an embodiment of the present invention;

Fig. 5 is a time chart illustrating the operation of the circuit of Fig. 4;

Fig. 6 is a block diagram of a synchronizing circuit according to another embodiment of the present invention;

Fig. 7 is a time chart illustrating the operation of the circuit of Fig. 6; and

Fig. 8 illustrates a circuit to which the present invention is adapted.

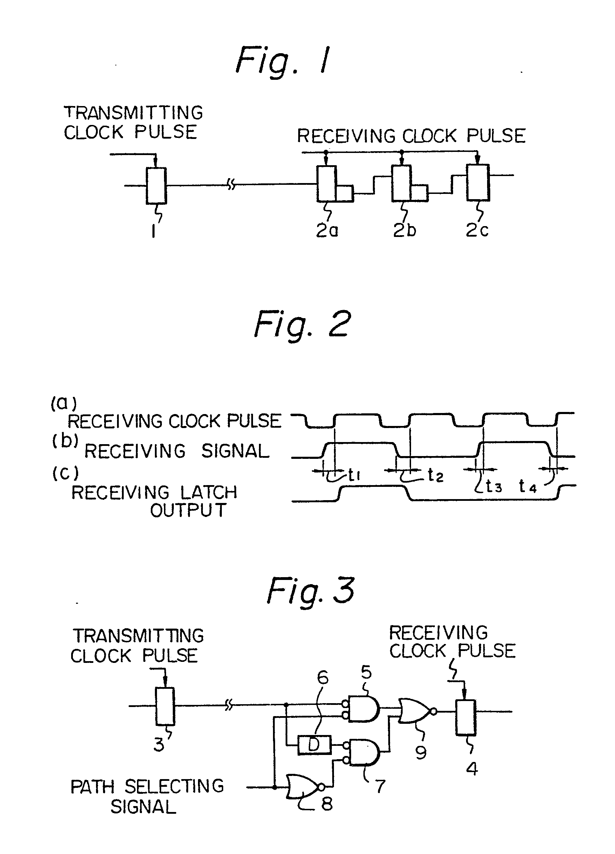

Fig. 1 shows a conventional synchronizing circuit in which signals are received by the latches of a plurality of stages relying upon a clock system on the receiving side.

In Fig. 1, reference numeral 1 denotes a transmitting circuit, and 2a, 2b and 2c denote synchronizing latch circuits. In the circuit of Fig. 1, even when the period is fixed, the time until the signal is received by the clock system on the receiving side remains uncertain, if the signal reaches a latch on the receiving side at almost the same time as the setup time. This is shown in Fig. 2, in which (a) denotes clock pulses (negative side) in the receiving side (b) denotes a signal received, and (c) denotes an output of the receiving latch. In Fig. 2, $t_1$ $t_2$ $t_3$ $t_4$, $t_1$ and $t_2$ are slightly greater than the setup time of the latch, and $t_3$ and $t_4$ are slightly smaller than the setup time of the latch. Therefore, Fig. 2 shows the state in which a signal of one period is dropped.

In another conventional method shown in Fig. 3, paths having different delay times are provided, and an external switch or an internal control latch is so set that an optimum path is selected. In Fig. 3, reference numeral 3 denotes a transmitting circuit, 4 denotes a receiving circuit, reference numerals 5, 7, 9 and 8 denote gate circuits, and 6 denotes a delay circuit. In Fig. 3, there are formed a first circuit which passes through the AND gate 5 and a second circuit which passes through the delay circuit 6 and the AND gate 7. The first and second circuits are selected by a switching signal via a gate 8 in accordance with the phase difference between the clock pulses of the sending side and the clock pulses of the receiving side. According to the circuit of Fig. 3, however, the delay time is set beforehand to select a given path, or a given path is selected beforehand, and another path is selected in case its operation is not stable.

According to the conventional methods shown in Figs. 1 and 3, the path cannot be exclusively determined in case the period changes or the signal transmission delay time changes between the clock pulses of the second side of the clock pulses of the receiving side.

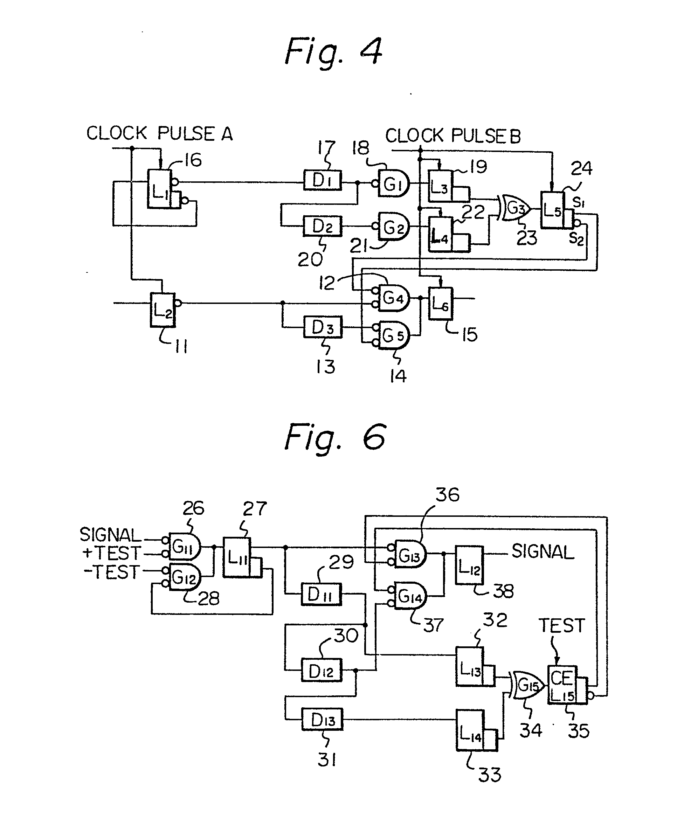

Fig. 4 illustrates an embodiment of the circuit of the present invention. In Fig. 4, a signal transmission circuit consists of a latch circuit 11 ($L_2$) for transmitting signals on the sending side, a first AND gate 12 ($G_4$) of which a first input is connected to the latch circuit 11 on the receiving side, a first delay circuit 13 ($D_3$) connected to the latch circuit 11 on the receiving side, a second AND gate 14 ($G_5$) of which a first input is connected to the first delay circuit 13, and a latch circuit 15 ($L_6$) for transmitting signals on the receiving side, the latch circuit 15 being connected to the output terminals of the first and second AND gates, 12 and 14, respectively. Further, a latch-setting circuit consists of a second delay circuit 17 ($D_1$) which is connected on the receiving side to a pilot signal generator circuit 16 ($L_1$) of the sending side, a first NOT circuit 18 ($G_1$) connected to the second delay circuit 17, a first flip-flop circuit 19 ($L_3$) which is connected to the NOT circuit 18 and which operates on the clock pulses of the receiving side, a third delay circuit 20 ($D_2$) connected to the second delay circuit 17, a second NOT circuit 21 ($G_2$) connected to the third delay circuit 20, and a second flip-flop circuit 22

($L_4$) which is connected to the second NOT circuit 21 and which operates on the clock pulses of the receiving side. A calculating circuit consists of an exclusive OR circuit 23 ($G_3$) of which the input is connected to the first and the second flip-flop circuits 19 and 22, respectively, and a flip-flop circuit 24 ($L_5$) which is connected to the output terminal of the exclusive OR circuit 23. The first and second outputs $S_1$ and $S_2$ of the third flip-flop circuit are fed to the second input terminals of the first and second AND gates 12 and 14, respectively.

In the circuit of Fig. 4, the transmission time from 16 ($L_1$) to 17 ($D_1$) to 18 ($G_1$) to 19 ($L_3$) is denoted by $T_{13}$, the transmission time from 16 ($L_1$) to 17 ($D_1$) to 20 ($D_2$) to 21 ($G_2$) to 22 ($L_4$) is denoted by $T_{14}$, the transmission time from 11 ($L_2$) to 12 ($G_4$) to 15 ($L_6$) is denoted by $T_{26}E$, the transmission time from 11 ($L_2$) to 13 ($D_3$) to 14 ($G_5$) to 15 ($L_6$) is denoted by $T_{26}M$, a value $T_{SH}$ is set to be slightly longer than the setup times and holding times of 19 ($L_3$), 22 ($L_4$) and 15 ($L_6$), and a clock period is denoted by $T_0$. In this case, if the values of the delay circuits $D_1$, $D_2$ and $D_3$ are so determined that:

$$T_{14}-T_{26}E<T_0$$

$$T_{13}-T_{26}E\geq T_{SH}$$

$$T_{26}M-T_{13}\approx T_{14}-T_{26}M\geq T_{SH}$$

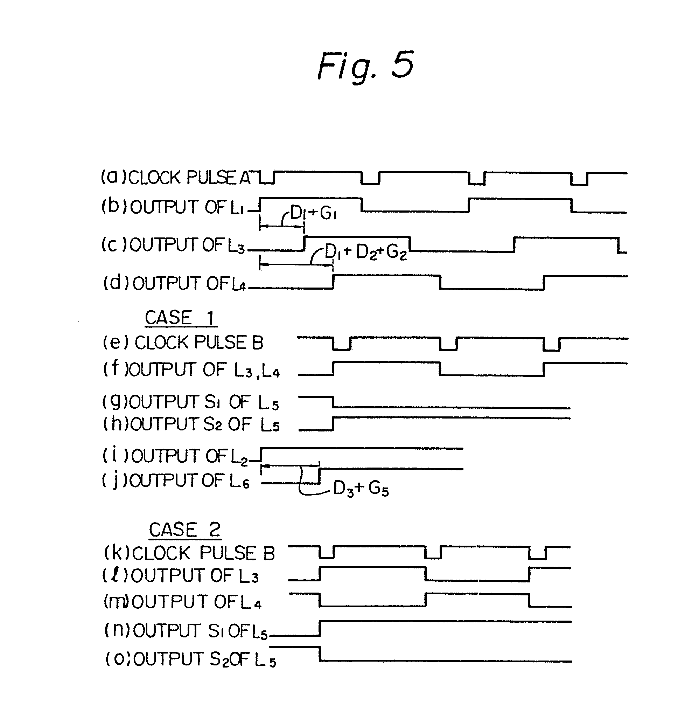

the operation of the circuit will be as illustrated in Fig. 5.

In Fig. 5, (a) shows the waveform of a clock pulse A, and (b) shows the waveform of an output of the circuit (16) ($L_1$). The waveforms of 19 ($L_3$) and 22 ($L_4$) then lag behind the output waveform of 16 ($L_1$) by $D_1+G_1$ and $D_1+D_2+G_2$, respectively, as illustrated by waveforms (c) and (d).

In this case, when the waveforms (c) and (d) correspond to the clock pulse B, the output of 19 ($L_3$) and the output of 22 ($L_4$) assume the same waveform, as shown by waveform (f), and 24 ($L_5$) produces an output $S_1$ of level "0" as shown by waveform (g) and produces an output $S_2$ of level "1" as shown by waveform (h). The inputs of 12 ($G_4$) and 14 ($G_5$) are then set by the above outputs. On the other hand, the output of 11 ($L_2$) is shown by waveforms (i) and, in this case, a signal transmitted from 11 ($L_2$) is properly sent to 15 ($L_6$) through 11 ($L_2$) 13 ($D_3$) and 14 ($G_5$). The waveform (j) illustrates an output waveform of 15 ($L_6$).

When the waveforms (c) and (d) do not coincide with the clock pulse B, as shown by waveform (k), 19 ($L_3$) and 22 ($L_4$) produces outputs as shown by waveforms (1) and (m), whereby the output $S_1$ of 24 ($L_5$) assumes a value "1" and the output $S_2$ assumes a value "1" and the output $S_2$ assumes a value "0". The transmitted signal is then properly sent to 15 ($L_6$) via a path 11 ($L_2$) to 12 ($G_4$).

In the circuit of Fig. 4, three or more paths and latch circuits may be provided to receive pilot signals, and the delay circuits may utilize the time difference of a master slave latch. Further, instead of inserting the second and third delay circuits 17 and 20 in the path for transmitting the pilot signals, the clock pulses of the flip-flop circuits 19 and 22 may be advanced by the same amounts of time, respectively, to obtain the same result.

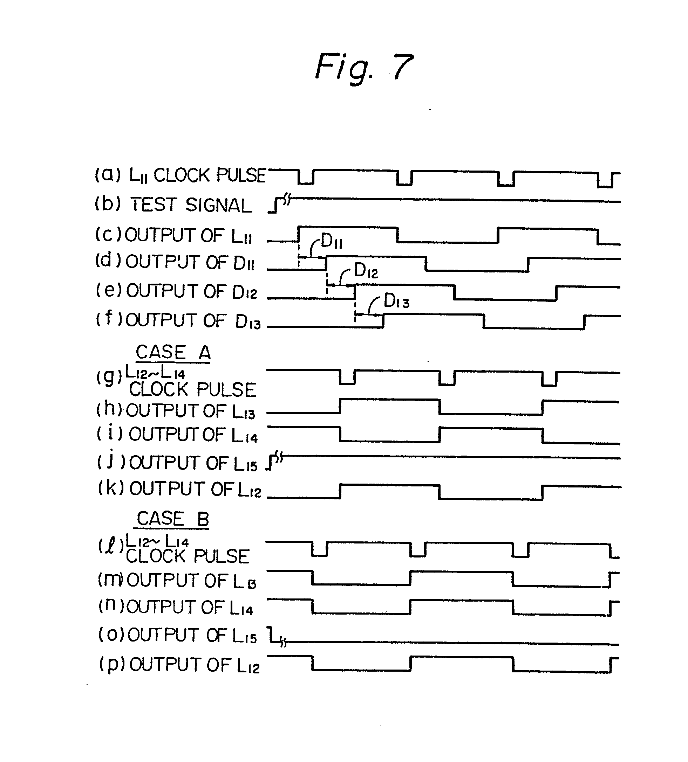

Fig. 6 illustrates another embodiment of the present invention. The circuit of Fig. 6 does not have the circuit specifically designed for the pilot signals that is possessed by the circuit of Fig. 4. In the circuit of Fig. 6, the pilot signal generator circuit has means for inverting the signals upon receipt of each clock pulse while the phase difference is being tested. Namely, the circuit consists of an AND gate 26 ($G_{11}$) which introduces through its input terminal a signal and a + TEST signal, a flip-flop circuit 27 ($L_{11}$) connected to the output terminal of the AND gate 26, and an AND gate 28 ($G_{12}$) which introduces through its input terminals a − TEST signal and the output of the circuit 27 and the outputs of the AND gate 28 and the circuit 26 are connected to the input of the circuit 27. The latch-setting circuit consists of a first delay circuit 29 ($D_{11}$) connected to the flip-flop circuit 27 of the pilot signal generator circuit, a second delay circuit 30 ($D_{12}$) connected to the output of the first delay circuit 29, a third delay circuit 31 ($D_{13}$) connected to the output of the second delay circuit 30, a first flip-flop circuit 32 ($L_{13}$) connected to the output of the first delay circuit 29, and a second flip-flop circuit 33 ($L_{14}$) connected to the output of the third delay circuit 31. The calculating circuit consists of an exclusive OR circuit 34 ($G_{15}$) connected to the output terminals of the first and second flip-flop circuits 32, 33, and a third flip-flop circuit 35 ($L_{15}$) which is connected to the output terminal of the exclusive OR circuit 34. The third flip-flop circuit 35 carries out the operation with every clock pulse during the phase difference testing mode and stops the operation when the phase difference is not being tested. The signal transmission path consists of a first AND gate 36 ($G_{13}$) of which the first input terminal is connected to the flip-flop circuit 27 of the pilot signal generator circuit, a second AND gate 37 ($G_{14}$) of which the first input is connected to the output of the second delay circuit 30, and a latch circuit 38 ($L_{12}$) connected to the output terminals of the first and second AND circuit 36, 37 respectively. Here, the first and second outputs of the third flip-flop circuit 35 are fed to the second input terminals of the first and second AND gates 36, 37 respectively.

In the circuit of Fig. 6, the transmission time from 27 ($L_{11}$) to 29 ($D_{11}$) to 32 ($L_{13}$) is denoted by $T_{23}$, the transmission time from 27 ($L_{11}$) to 29 ($D_{11}$) to ($D_{12}$) to 31 ($D_{13}$) to 33 ($L_{14}$) is denoted by $T_{24}$, the transmission time from 27 ($L_{11}$) to 36 ($G_{13}$) to 38 ($L_{12}$) is denoted by $T_{22}E$, the transmission time from 27 ($L_{11}$) to 29 ($D_{11}$) to 30 ($D_{12}$) to 37 ($G_{14}$) to 38 ($L_{12}$) is denoted by $T_{22}M$, and $T_{SH}$ and $T_0$ are selcted to be the same as those of the circuit of Fig. 4. In this case, the values of the delay circuits $D_{11}$, $D_{12}$ and $D_{13}$ are so determined as to satisfy the following relations:

$$T_{24}-T_{22}\bar{E}<T_0$$

$$T_{23}-T_{22}E\geqq T_{SH}$$

$$T_{22}M-T_{23}\approx T_{24}-T_{22}M\geqq T_{SH}$$

Among the signals to be transmitted, at least one signal, for example, a signal "SIGNAL" of Fig. 6 is inverted upon each receipt of a clock pulse while the phase difference is being tested. On the receiving side, in this case, clock pulses are allowed to be received by the flip-flop circuit 35 ($L_{15}$) only during the test period. Thus, the circuit 35 ($L_{15}$) stores measured results of the phase difference on the sending side and on the receiving side, like the cases of Figs. 4 and 5. Therefore, either one path of the AND gate 36 or 37 ($G_{13}$ or $G_{14}$) should be selected by the output of the third flip-flop circuit 35 ($L_{15}$). The operation will be described below with reference to Fig. 7.

In Fig. 7, (a) shows the waveform of clock pulses from the flip-flop circuit 27 ($L_{11}$), waveform (b) shows a TEST signal, and waveform (c) shows the output of the flip-flop circuit 27 ($L_{11}$). In this case, the output waveforms of the delay circuits 29 ($D_{11}$), 30 ($D_{12}$) and 31 ($D_{13}$) are as shown in (d), (e) and (f) respectively. In the circuit of Fig. 6, the clock pulses of the flip-flop circuit 27 ($L_{11}$) and the clock pulses of the flip-flop circuits 32 ($L_{13}$), 33 ($L_{14}$) have different phases. Therefore, the flip-flop circuit 27 ($L_{11}$) is first flipped using the TEST signal of the level "1", and the result is set in the flip-flop circuit 32 ($L_{13}$) via the delay circuit 29 ($D_{11}$), and is also set in the flip-flop circuit 33 ($L_{14}$) via delay circuits 29 ($D_{11}$), 30 ($D_{12}$), 31 ($D_{13}$). In CASE A, if the phase relation of the clock pulses is such that values set in the flip-flop circuits 32 ($L_{13}$) and 33 ($L_{14}$) contradict each other, as shown by waveforms (h) and (i), the output value of the flip-flop circuit 35 ($L_{15}$) assumes the level "1" as shown by waveform (j), and a path from the flip-flop circuit 27 ($L_{11}$) to the latch circuit 38 ($L_{12}$) via the first AND gate 36 is selected. The waveform (k) illustrates the output of the circuit 38 ($L_{12}$). In CASE B, when the phase relation is such that values sent to the flip-flop circuits 32 ($L_{13}$) and 33 ($L_{14}$) have the same value as each other, as shown by waveforms (m) and (n), the output of the flip-flop circuit 35 ($L_{15}$) assumes the level "0" as shown by waveform (o), and a path from the flip-flop circuit 27 ($L_{11}$) to the latch circuit 38 ($L_{12}$) via the second AND gate 37 is selected. The diagram (p) illustrates the output of the circuit 38 ($L_{12}$). When the value of the flip-flop circuit 35 ($L_{15}$) is determined, depending upon case A or case B, the TEST signal is set to "0", the value of the flip-flop circuit 35 ($L_{13}$) is fixed, and the flipping operation of the flip-flop circuit 27 ($L_{11}$) is stopped. Under this condition, the level of the signal SIGNAL is changed to "0" and "1"; signals are transmitted from the flip-flop circuit 27 ($L_{11}$) to the latch circuit 38 ($L_{12}$).

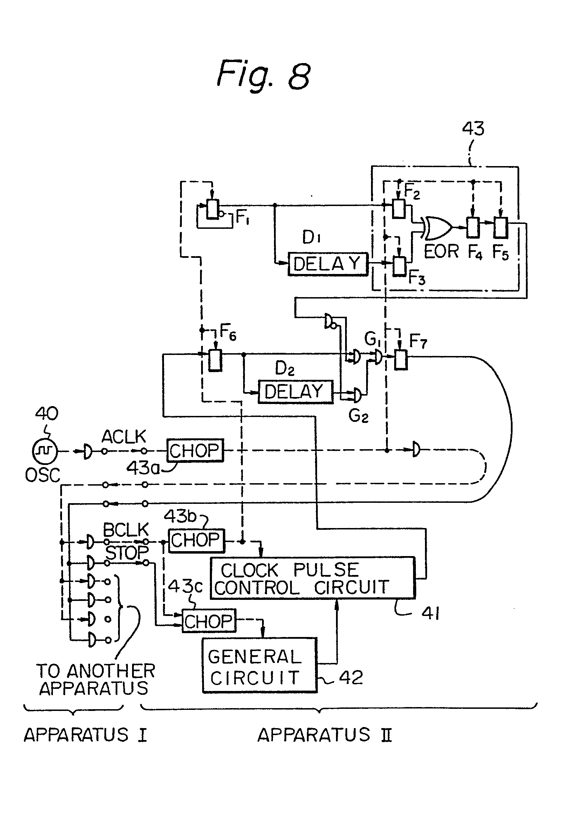

An example of the synchronizing circuit of the present invention in use is described below with reference to Fig. 8, in which an apparatus I provides a clock generator (OSC) 40, and distributor clock pulses ACLK, BCLK and stop pulses STOP to the devices in the system. An apparatus II has the function of producing stop pulses relying upon the clock control circuit 41 and relaying clock pulses. The apparatus II includes general circuit 42. Other devices inclusive of the general circuit of the apparatus II subject all of the clock pulses and stop pulses to the AND function, and use the outputs as gate clocks. To halt and operate the clock pulses, it is necessary to turn the stop pulses on and off. The same holds true for controlling a so-called single clock mode or the like. In Fig. 8, a dotted line denotes the clock system, a solid line denotes the signal system, and 43a, 43b and 43c denote chopping (differentiation) circuits.

In the circuit of Fig. 8, if a delay time from the generator (OSC) 40 to $F_1$, $F_6$, clock pulse control circuit 41, and general circuit 42 is denoted by M, and a delay time from the generator 40 to $F_2$, $F_3$, $F_4$, $F_5$ and $F_7$ is denoted by N, there develops a phase difference NM.

Here, the values are so set that:

$$Td_1 < Td_3 < Td_2 < Td_4$$

$$Td_2 - Td_1 \approx Td_4 - Td_3 >$$

width of clock pulse

$$Td_3 - Td_1 > Tset, \ Td_4 - Td_2 > Tset$$

wherein Tset denotes the setup time and the hold time of the flip-flop circuit, $Td_1$ denotes the delay time from $F_1$ to $F_2$, $Td_2$ denotes the delay time from $F_1$ to $D_1$ to $F_3$, $Td_3$ denotes the delay time from $F_6$ to $G_1$ to $F_7$, and $Td_4$ denotes the delay time from $F_6$ to $D_2$ to $G_2$ to $F_7$.

When a clock period of the clock oscillator (OSC) 40 is denoted by T, and the phase difference NM is given by

$$N - M - [\frac{N - M}{T}] \times T = Tdnm$$

the transmission from $F_6$ to $F_7$ develops a phase difference T Tdnm. Therefore, when,

$$T \ Tdnm > Td_3 + Tset$$

the signals are properly transmitted from $F_6$ to $F_7$. However, when,

$$T \ Tdnm \leq Td_3 + Tset$$

the signals are not correctly transmitted from $F_6$ to $F_7$. That is to say, the circuit operates properly in some cases, but operates erroneously in other cases.

Therefore, when the synchronizing circuit 43 establishes the relations $T - Tdnm > Td_1 + Tset$, $T - Tdnm < Td_1 + Tset$, the set value by the clock pulses of $F_2$ and $F_3$ becomes the same value, and the circuit 43 establishes the relations, $T - Tdnm > Td_1 + Tset$, $T - Tdnm < Td_2 + Tset$, or $T - Tdnm < Td_1 + Tset$, $T - Tdnm < Td_2 + Tset$, the set value by the clock pulses of $F_2$ and $F_3$ may be the same value or may be a different value.

Therefore, when the value set by the clock pulses of $F_2$ and $F_3$ have the same value, a path $F_6$ to $G_1$ to $F_7$ is selected. When the value set by the clock pulses of $F_2$ and $F_3$ have different values, a path $F_6$ to $D_2$ to $G_2$ to $F_7$ is selected.

Consequently, the signals are synchronized without requiring human intervention, and the flip-flop circuit $F_7$ operates stably at all times. Further, even when the clock period of the oscillator (OSC) 40 is varied, the synchronizing circuit of the present invention can quickly respond to the clock pulses of any period.

According to the present invention, as illustrated in detail in the foregoing, the delay time of the signal transmission path can be automatically adjusted no matter how the phase difference changes between the transmitting clock system and the receiving clock system, without requiring human intervention.

**Claims**

1. A synchronizing circuit for synchronizing data signals transmitted between two clock systems having a varying phase difference comprising a plurality of data transmission paths (16, 17, 18, 19; 16, 17, 20, 21, 22; 11, 12, 15; 11, 13, 14, 15) each having a different delay period, means for determining the phase difference between clock pulses on the transmission side of the transmission paths and clock pulses on the receiver side thereof and for adjusting the delay given to received data in accordance with the said phase difference by selecting one of the transmission paths, characterised in that the means for determining the phase difference comprises a pilot signal generator (16; 27) on the transmission side providing a pilot signal corresponding to the transmission side clock pulses, a plurality of latches (15, 19, 22; 32, 33, 38) on the receiver side of the transmission paths which each latch onto the pilot signal to give different amounts of delay therein relative to the receiver and means (23, 24, 34, 35) for calculating the phase difference between the transmission side clock pulses and the receiver side clock pulses in accordance with the degree of coincidence between the latched pilot signals and the receiver side clock pulses.

2. A synchronizing circuit according to claim 1, characterised in that said transmission circuit consists of a first latch circuit (11) for transmitting signals on the sending side, a first AND gate (12) of which the first input is connected to said first latch circuit (11) on the receiving side, a first delay circuit (13) connected to said latch circuit (11) on the receiving side, a second AND gate (14) of which the first input is connected to said first delay circuit (13), and a second latch circuit (15) for transmitting signals on the receiving side, said second latch circuit (15) being connected to the output terminals of said first and second AND gates (12, 13) a latch-setting circuit consisting of a second delay circuit (17) which is connected on the receiving side to the pilot signal generator circuit (16) of the sending side, a first NOT circuit (18) connected to said second delay circuit (17), a first flip-flop circuit (19) which is connected to said first NOT circuit (18) and which operates on the clock pulses of the receiving side, a third delay circuit (20) connected to said second delay circuit (17), a second NOT circuit (21) connected to said third delay circuit (20), and a second flip-flop circuit (22), which is connected to said second NOT circuit (21) and which operates on the clock pulses of the receiving side, said calculating means consists of an exclusive OR circuit (23) of which the input is connected to said first flip-flop circuit (19) and the second flip-flop circuit (22), a third flip-flop circuit (24) which is connected to the output terminal of said exclusive OR circuit (23), and the first and second outputs and of said third flip-flop circuit (24) are fed up to the second input terminals of the first and second AND gates (12, 14), and

when a transmission time from said pilot signal generator circuit (16) to said first flip-flop circuit (19) is denoted by $T_{13}$, a transmission time from said pilot signal generator circuit (16) to said second flip-flop circuit (22) is denoted by $T_{14}$, a transmission time from said first latch circuit (11) via said first AND gate (12) to said second latch circuit (15) is denoted by $T_{26}E$, a transmission time from said second AND gate (14) to said second latch circuit (15) is denoted by $T_{26}M$, a value $T_{SH}$ is set to be slightly longer than the setup times and the holding times of said first and second flip-flop circuits (19, 22) and said second latch circuit (15), and a clock pulse period is denoted by $T_0$, the value of said first, second and third delay circuit (13, 17, 20) are so determined that:

$$T_{14}-T_{26}E<T_0$$

$$T_{13}-T_{26}E\geq T_0$$

$$T_{26}M-T_{13}\approx T_{14}-T_{26}M\geq T_{SH}$$

3. A synchronizing circuit according to claim 1, characterised in that said pilot signal generator circuit has means (26, 27, 28) for inverting the signal upon receipt of each clock pulse while the phase difference is being tested, a latch-setting circuit consists of a first delay circuit (29) connected to a flip-flop circuit (27) of said pilot signal generator circuit, a second delay circuit (30) connected to said first delay circuit (29), a third delay circuit (31) connected to said second delay circuit (30), a first flip-flop circuit (32) connected to the output of said first delay circuit (29), and a second flip-flop circuit (33) connected to said third delay circuit (31), said calculating means consists of an exclusive OR circuit (34) connected to the output terminals of said first and second flip-flop circuits (32, 33), and a third flip-flop circuit (35) which is connected to the output terminal of said exclusive OR circuit (34) and which is operated upon receipt of each clock pulse while the phase difference is being tested and which stops the operation while the phase difference is not being tested, the signal transmission path consists of a first AND circuit (36) of which the first input terminal is connected to said flip-flop circuit (27) of the pilot signal generator circuit, a second AND circuit (37) of which the first input is connected to the output of said second delay circuit (30), and a latch circuit (38) connected to the output terminals of said first and second AND circuits (36, 37) and the first and second outputs of said third flip-flop circuit (35) are fed to the second input terminals of said first and second AND gates (36, 37), and

when a transmission time from said pilot signal generator circuit to said first flip-flop circuit (32) is denoted by $T_{23}$, a transmission time from said pilot signal generator circuit to said second flip-flop circuit (33) is denoted by $T_{24}$, a transmission time from said pilot signal generator circuit via said first AND gate (36) to said latch circuit (38) is denoted by $T_{22}E$, a transmission time from said pilot signal generator circuit via said first delay circuit (29) and said second AND gate (37) to said latch circuit (38) is denoted by $T_{22}M$, a value $T_{SH}$ is set to be slightly longer than the setup times and the holding times of said first and second flip-flop circuits (32, 33) and said second latch circuit (38), and a clock pulse period is denoted by $T_0$, the value of said first, second and third delay circuits (29, 30, 31) are so determined that:

$$T_{24}-T_{22}E<T_0$$

$$T_{23}-T_{22}E\geq T_{SH}$$

$$T_{22}M-T_{23}\approx T_{24}-T_{22}M\geq T_{SH}$$

4. A synchronizing circuit according to claim 3, characterised in that said means for inverting the signal upon receipt of each clock pulse while the phase difference is being tested consists of an AND circuit (26) which introduces through its input terminal a signal and a + TEST signal, a flip-flop circuit (27) connected to the output terminal of said AND circuit (26), and another AND circuit (28) which introduces through its input terminal a − TEST signal and the output of said flip-flop circuit (27) and which produces the input to said flip-flop circuit (27) together with the output of said other AND circuit (26).

**Patentansprüche**

1. Synchronisationskreis zur Synchronisierung von Datensignalen, welche zwischen zwei getakteten Systemen übertragen werden, die eine veränderliche Phasendifferenz haben, mit einer Vielzahl von Datenübertragungswegen (16, 17, 18, 19; 16, 17, 20, 21, 22; 11, 12, 15; 11, 13, 14, 15), die jeweils eine verschiedene Verzögerungsperiode haben, Einrichtungen zur Bestimmung der Phasendifferenz zwischen Taktimpulsen auf der Sendeseite der Übertragungswege und Taktimpulsen auf der Empfängerseite derselben und zur Einstellung der Verzögerung, welche die empfangenen Daten in Übereinstimmung mit der genannten Phasendifferenz erfahren, durch Auswahl eines der Übertragungswege, dadurch gekennzeichnet, daß die Einrichtungen zur Bestimmung der Phasendifferenz einen Pilotsignalgenerator (16; 27) auf der Sendeseite umfassen, der ein Pilotsignal liefert, welches den Taktimpulsen auf der Sendeseite entspricht, und eine Vielzahl von Klammerschaltungen (15, 19, 22; 32, 33, 38) auf der Empfängerseite der Übertragungswege, welche jeweils das Pilotsignal halten, um unterschiedliche Beträge der Verzögerung in diesen relativ zu dem Empfänger anzugeben, und Einrichtungen (23, 24; 34, 35) zur Berechnung der Phasendifferenz zwischen der Taktimpulsen der Sendeseite und den Taktimpulsen der Empfängerseite, in Übereinstimmung mit dem Grad der Koinzidenz zwischen den gehaltenen Pilotsignalen und den Taktimpulsen der Empfängerseite.

2. Synchronisationskreis nach Anspruch 1, dadurch gekennzeichnet, daß die Übertragungsschaltung umfaßt: eine erste Klammerschaltung (11) auf der Sendeseite zum Senden der Signale, ein erstes UND-Glied (12), dessen erster Eingang auf der Empfängerseite mit der genannten ersten Klammerschaltung (11) verbunden ist, eine erste Verzögerungsschaltung (13), welche auf der Empfängerseite mit der genannten Klammerschaltung (11) verbunden ist, ein zweites UND-Glied (14), dessen erster Eingang mit der genannten ersten Verzögerungsschaltung (13) verbunden ist, und eine zweite Klammerschaltung (15), die zur Übertragung von Signalen auf den Empfängerseite dient und die mit den Ausgangsanschlüssen der ersten und zweiten UND-Glieder (12, 13) verbunden ist, eine Halte-Einstellschaltung, die aus einer zweiten Verzögerungsschaltung (17), die auf der Empfangerseite mit dem Pilotsignalgeneratorkreis (16) der Sendeseite verbunden ist, einem Inverter (18), der mit der genannten zweiten Verzögerungsschaltung (17) verbunden ist, einer ersten Flipflop-Schaltung (19), die mit dem genannten ersten Inverter (18) verbunden ist umd mit den Taktimpulsen der Empfängerseite arbeitet, einer dritten Verzögerungsschaltung (20), die mit der genannten zweiten Verzögerungsschaltung (17) verbunden ist, einem zweiten Inverter (21) der mit der dritten Verzögerungsschaltung (20) verbunden ist, und einer zweiten Flipflop-Schaltung (22) besteht, die mit dem genannten zweiten Inverter (21) verbunden ist und mit den Taktimpulsen der Empfängerseite arbeitet, daß die Berechnungseinrichtung aus einer exklusiven ODER-Schaltung (23), deren Eingang mit der genannten ersten Flipflop-Schaltung (19) und der zweiten Flipflop-Schaltung (22) verbunden ist, und einer dritten Flipflop-Schaltung (24) besteht, die mit dem Ausgangsanschluß der genannten exklusiven ODER-Schaltung (23) verbunden ist und deren erster und zweiter Ausgang zu den zweiten Eingangsanschlüssen der ersten bzw. der zweiten UND-Gliecher (12, 14) geführt ist, und

daß dann, wenn eine Übertragungzeit von dem genannten Pilotsignalgeneratorschaltung (16) zu der ersten Flipflop-Schaltung (19) mit $T_{13}$ bezeichnet ist, eine Übertragungszeit von dem genannten Pilotsignalgeneratorschaltung (16) zu der genannten zweiten Flipflop-Schaltung (22) mit $T_{14}$ bezeichnet ist, eine Übertragungszeit von der genannten ersten Klammerschaltung (11) über das genannte erste UND-Glied (12) zu der genannten zweiten Klammerschaltung (15) mit $T_{26}E$ bezeichnet ist, eine Übertragungszeit von dem genannten zweiten UND-Glied (14) zu der genannten zweiten Klammerschaltung (15) mit $T_{26}M$ bezeichnet ist, ein Wert $T_{SH}$ so eingestellt ist, daß er geringfügig größer als die Einstellzeiten und die Haltezeiten der ersten und der zweiten Flipflop-Schaltungen (19, 22) und der genannten zweiten Klammerschaltung (15) ist und eine Taktimpulsperiode mit $T_0$ beziechnet ist, die Werte der ersten, zweiten und dritten Verzögerungsschaltung (13, 17, 20) so bestimmt sind, daß

$$T_{14} - T_{26}E < T_0$$

$$T_{13} - T_{26}E \geq T_0$$

$$T_{26}M - T_{13} \approx T_{14} - T_{26}M \geq T_{SH}$$

3. Synchronisationskreis nach Anspruch 1, dadurch gekennzeichnet, daß die genannte Pilotsignalgeneratorschaltung Einrichtungen (26, 27, 28) zur Invertieren des Signals bei Empfang eines jeden Taktimpulses hat, während die Phasendifferenz geprüft wird, eine Klammereinstellschaltung aus einer ersten Verzögerungsschaltung (29), die mit einer Flipflop-Schaltung (27) der genannten Pilotsignalgeneratorschaltung verbunden ist, einer zweiten Verzögerungsschaltung (30), die mit der genannten ersten Verzögerungsschaltung (29) verbunden ist, einer dritten Verzögerungsschaltung (31), die mit der genannten zweiten Verzögerungsschaltung (30) verbunden ist, einer ersten Flipflop-Schaltung (32), die mit dem Ausgang der genannten ersten Verzögerungsschaltung (29) verbunden ist, und einer zweiten Flipflop-Schaltung (33) besteht, die mit der genannten dritten Verzögerungsschaltung (31) verbunden ist, die Berechnungseinrichtung aus einer exklusiven ODER-Schaltung (34) besteht, die mit den Ausgangsanschlüssen der genannten ersten und zweiten Flipflop-Schaltungen (32, 33) verbunden ist, und aus einer dritten Flipflop-Schaltung (35), die mit dem Ausgangsanschluß der genannten exklusiven ODER-Schaltung (34) verbunden ist und bei Empfang eines jeden Taktimpulses betrieben wird, während die Phasendifferenz geprüft wird, und die den Betrieb unterbricht, wenn die Phasendifferenz nicht geprüft wird, der Signalübertragungsweg aus einem ersten UND-Glied (36), dessen erster Eingangsanschluß mit der genannten Flipflop-Schaltung (27) der Pilotsignalgeneratorschaltung verbunden ist, und einem zweiten UND-Glied (37), deren erster Eingang mit dem Ausgang der genannten zweiten Verzögerungsschaltung (30) verbunden ist, und einer Klammerschaltung (38) besteht, die mit den Ausgangsschlüssen der genannten ersten und zweiten UND-Schaltungen (36, 37) verbunden sind, und die ersten und zweiten Ausgänge der genannten dritten Flipflop-Schaltung (35) zu den zweiten Eingangsanschlüssen der genannten ersten und zweiten UND-Glieder (36, 37) zugeführt wird, und

daß dann, wenn die Übertrangungszeit von der genannten ersten Pilotsignalgeneratorschaltung zu der genannten ersten Flipflop-Schaltung (32) mit $T_{23}$ bezeichnet ist, eine Übertragungszeit von der genannten Pilotsignalgeneratorschaltung zu der genannten zweiten Flipflop-Schaltung (33) mit $T_{24}$ bezeichnet ist, eine Übertragungszeit von der genannten Pilotsignalgeneratorschaltung über das genannte erste UND-Glied (36) zu der Klammerschaltung (38) durch $T_{22}E$ bezeichnet ist, eine Übertragungszeit von der genannten Pilotsignalgeneratorschaltung über die genannte erste Verzögerungsschaltung (29) und das genannte zweite UND-Glied (37) zu der Klammer-schaltung (38) mit $T_{22}M$ bezeichnet ist, ein Wert $T_{SH}$ so eingestellt wird, daß er etwas länger als die Einstellzeiten und die Haltezeiten der genannten ersten und zweiten Flipflop-Schaltungen (32, 33) und der genannten zweiten Klammerschaltung (38) ist, und die Taktimpulsperiode mit $T_0$ bezeichnet wird, die Werte der genannten ersten, zweiten und dritten Verzögerungsschaltungen (29, 30, 31) so bestimmt sind, daß:

$$T_{24} - T_{22}E < T_0$$

$$T_{23} - T_{22}E \geq T_{SH}$$

$$T_{22}M - T_{23} \approx T_{24} - T_{22}M \geq T_{SH}$$

4. Synchronisationskreis nach Anspruch 3, dadurch gekennzeichnet, daß die Einrichtungen zur Invertierung des Signals bei Empfang eines jeden Taktimpulses, während die Phasendifferenz geprüft wird, aus einer UND-Schaltung (26), welches über seinen Eingangsanschluß ein Signal und ein +TEST-Signal einführt, einer Flipflop-Schaltung (27), die mit dem Ausgangsanschluß der genannten UND-Schaltung (26) verbunden ist, und einer anderen UND-Schaltung (28) besteht, das über seinen Eingangsanschluß ein −TEST-Signal und den Ausgang der genannten Flipflop-Schaltung (27) einführt, und zusammen mit dem Ausgang der genannten anderen UND-Schaltung (26) einen Eingang für die Flipflop-Schaltung (27) erzeugt.

**Revendications**

1. Circuit de sysnchronisation destiné à synchroniser des signaux de données transmis entre deux systèmes d'horloge ayant un déphasage variable, comportant plusieurs circuits de transmission de données (16, 17, 18, 19; 16, 17, 20, 21, 22; 11, 12, 15; 11, 13, 14, 15) ayant chacun une période de retard différente pour déterminer le déphasage entre les impulsions d'horloge sur le côté d'émission des circuits de transmission et des impulsions d'horloge sur leurs côtés de réception et pour régler le retard donné pour des données reçues en fonction dudit déphasage en sélectionnant l'un des circuits de transmission, caractérisé en ce que le dispositif qui détermine le déphasage comporte un générateur de signal pilote (16; 27) sur le côté d'émission, produisant un signal pilote correspondant aux impulsions d'horloge du côté d'émission, plusieurs registres (15, 19, 22; 32, 33, 38) sur le côté de récepteur des circuits de transmission chaque registre sur le signal pilote donnant des valeurs différentes de retard par rapport au récepteur et un dispositif (23, 24; 34, 35) pour calculer le déphasage entre les impulsions d'horloge du côte d'émission et les impulsions d'horloge du côté de récepteur en fonction du degré de coïncidence entre les signaux pilotes enregistrés et les impulsions d'horloge du côté de récepteur.

2. Circuit de synchronisation selon la revendication 1, caractérisé en ce que ledit circuit de transmission consiste en un premier circuit de registre (11) pour émettre des signaux sur le côté d'émission, une première porte ET (12) dont la première entrée est connectée audit premier circuit de registre (11) sur le côté de réception, un premier circuit à retard (13) connecté audit circuit de registre (11) sur le côté de réception, une seconde porte ETV(14) dont la première entree est connectée audit premier circuit à retard (13) zt un second circuit de registre (15) pour émettre des signaux sur le côté de réception, ledit second circuit de registre (15) étant connecté aux bornes de sortie de ladite première et ladite seconde portes ET (12, 13), un circuit de mise en place de registre consistant en un second circuit à retard (17) qui est connecté sur le côté de réception au circuit générateur de signal pilote (16) du côté d'émission, un premier circuit NON (18) connecté audit second circuit à retard (17), un premier circuit bistable (19) qui est connecté audit premier circuit NON (18) et qui fonctionne sur les impulsions d'horloge du côté de réception et un troisième circuit à retard (20) connecté audit second circuit à retard (17), un second circuit NON (21) connecté audit troisième circuit à retard (20) et un second circuit bistable (22) qui est connecté audit second circuit NON (21) et qui fonctionne sur les impulsions d'horloge du côté de réception, ledit dispositif de calcul comprenant un circuit OU-EXCLUSIF (23) dont l'entrée est connectée audit premier circuit bistable (19) et au second circuit bistable (22), un troisième circuit bistable (24) qui est connecté à la borne de sortie dudit circuit OU-EXCLUSIF (23) et la première et la seconde sorties dudit troisième circuit bistable (24) étant appliquées aux secondes bornes d'entrée de la première et la seconde portes ET (12, 14) et si un temps de transmission depuis ledit circuit générateur de signal pilote (16) jusqu'au premier circuit bistable (19) est désigné par (T13); un temps de transmission dudit circuit générateur de signal pilote (16) jusqu'audit second circuit bistable (22) est désigné par (T14), un temps de transmission depuis ledit premier circuit de registre (11) par ladite première porte ET (12) jusqu'au second circuit de registre (15) est désigné par (T26E), un temps de transmission depuis la seconde porte ET (14) jusqu'audit second circuit de registre (15) est désigné par (T26M), une valeur (TSH) est établie pour être légèrement plus longue que les temps de mise en place et les temps de maintien dudit premier et dudit second circuits bistables (19, 22) et ledit second circuit de registre (15) et une période d'impulsions d'horloge est désignée par (T0), les valeurs dudit premier, dudit second et dudit troisième circuits à retard (13, 17, 20) sont déterminées de manière qui:

$$T14-T26E<T0$$

$$T13-T26E\geq T0$$

$$T26M-T13\approx T14-T26M\geq TSH$$

3. Circuit de synchronisation selon la revendication 1, caractérisé en ce que ledit circuit générateur de signal pilote comporte un dispositif (26, 27, 28) destiné à inverser le signal à la réception de chaque impulsion d'horloge pendant que le déphasage est contrôlé, un circuit de mise en place de registre existant en un premier circuit à retard (29) connecté à un circuit bistable (27) dudit circuit générateur de signal pilote, un second circuit à retard (30) connecté audit premier circuit à retard (29), un troisième circuit à retard (31) connecté audit second circuit à retard (30), un premier circuit bistable (32) connecté à la sortie dudit premier circuit à retard (29) et un second circuit bistable (33) connecté audit troisième circuit à retard (31), ledit dispositif de calcul comprenant un circuit OU-EXCLUSIF (34) connecté aux bornes de sortie dudit premier et dudit second circuits bistables (32, 33) et un troisième circuit bistable (35) est connecté à la borne de sortie dudit circuit OU-EXCLUSIF (34) et qui est commandé à la réception de chaque impulsion d'horloge pendant que le déphasage est contrôlé et qui interrompt le fonctionnement pendant qui le déphasage n'est pas contrôlé, le circuit de transmission de signal comprenant un premier circuit ET (36) dont la première borne d'entrée est connectée audit circuit bistable (27) du circuit générateur de signal pilote, un second circuit ET (37) dont la première entrée est connectée à la sortie dudit second circuit à retard (30) et un circuit de registre (38) connecté aux bornes de sortie dudit premier et dudit second circuits ET (36, 37), et la première et la seconde sorties dudit troisième circuit bistable (35) étant appliquées aux secondes bornes d'entrée de ladite première et ladite seconde portes ET (36, 37), et lorsqu'un temps de transmission deouis ledit circuit générateur de signal pilote jusqu'audit premier circuit bistable (32) est désigné par (T23), un temps de transmission depuis le circuit générateur de signal pilote jusqu'audit second circuit bistable (23) est désigné par (T24), un temps de transmission depuis ledit circuit générateur de signal pilote par ladite première porte ET (36) jusqu'audit circuit de registre (38) est désigne par (T22E), un temps de transmission depuis ledit circuit générateur de signal pilote par ledit premier circuit à retard (29) et ladite seconde porte ET (37) jusqu'audit circuit de registre (38) est désigné par (T22M), une valeur (TSH) est établie pour être légèrement plus longue que les temps de mise en place et les temps de maintien dudit premier et dudit second circuits bistables (32, 33) et dudit second circuit de registre (38), et une période d'impulsions d'horloge est désignée par (T0), les valeurs dudit premier, dudit second et dudit troisième circuit à retard (29, 30, 31) sont déterminées de manière que:

$$T24-T22E<T0$$

$$T23-T22E\geq TSH$$

$$T22M-T23\approx T24-T22M\geq TSH$$

4. Circuit de synchronisation selon la revendication 3, caractérisé en ce que ledit dispositif d'inversion du signal à la réception de chaque impulsion d'horloge pendant que le déphasage est contrôlé comporte un circuit ET (26) qui introduit par son entrée un signal et un signal +TEST, un circuit bistable (27) connecté à la borne de sortie dudit circuit ET (26) et un autre circuit ET (28) qui introduit par sa borne d'entrée un signal −TEST et la sortie dudit circuit bistable (27) et qui produit le signal d'entrée dudit circuit bistable (27) avec la sortie dudit autre circuit ET (26).

# Fig. 1

TRANSMITTING
CLOCK PULSE

RECEIVING CLOCK PULSE

1

2a    2b    2c

# Fig. 2

(a)
RECEIVING CLOCK PULSE

(b) RECEIVING SIGNAL

(c)
RECEIVING LATCH
OUTPUT

$t_1$    $t_2$    $t_3$   $t_4$

# Fig. 3

TRANSMITTING
CLOCK PULSE

RECEIVING
CLOCK PULSE

3

6    5

D

9

7

4

PATH SELECTING
SIGNAL

8

*Fig. 4*

*Fig. 6*

# Fig. 5

(a) CLOCK PULSE A

(b) OUTPUT OF L₁    $D_1 + G_1$

(c) OUTPUT OF L₃    $D_1 + D_2 + G_2$

(d) OUTPUT OF L₄

## CASE 1

(e) CLOCK PULSE B

(f) OUTPUT OF L₃, L₄

(g) OUTPUT S₁ OF L₅

(h) OUTPUT S₂ OF L₅

(i) OUTPUT OF L₂

(j) OUTPUT OF L₆    $D_3 + G_5$

## CASE 2

(k) CLOCK PULSE B

(l) OUTPUT OF L₃

(m) OUTPUT OF L₄

(n) OUTPUT S₁ OF L₅

(o) OUTPUT S₂ OF L₅

# Fig. 7

(a) $L_{11}$ CLOCK PULSE

(b) TEST SIGNAL

(c) OUTPUT OF $L_{11}$   $D_{11}$

(d) OUTPUT OF $D_{11}$   $D_{12}$

(e) OUTPUT OF $D_{12}$   $D_{13}$

(f) OUTPUT OF $D_{13}$

## CASE A

(g) $L_{12} \sim L_{14}$ CLOCK PULSE

(h) OUTPUT OF $L_{13}$

(i) OUTPUT OF $L_{14}$

(j) OUTPUT OF $L_{15}$

(k) OUTPUT OF $L_{12}$

## CASE B

(ℓ) $L_{12} \sim L_{14}$ CLOCK PULSE

(m) OUTPUT OF $L_{13}$

(n) OUTPUT OF $L_{14}$

(o) OUTPUT OF $L_{15}$

(p) OUTPUT OF $L_{12}$